# EUROPÄISCHE PATENTANMELDUNG

(11) **EP 1 236 703 A2**
(43) Veröffentlichungstag der Anmeldung: **04.09.2002**
(21) Anmeldenummer: 02003773.5
(22) Anmeldetag: 20.02.2002
(51) Int. Cl.: C04B 30/02, F16L 59/00

(54) **Wärmedämmformkörper**

(30) Priorität: 28.02.2001 DE 10110730
(71) Anmelder: E.G.O. ELEKTRO-GERÄTEBAU GmbH, D-75038 Oberderdingen (DE)
(72) Erfinder: Wilde, Eugen, 75438 Knittlingen-Freudenstein (DE); Kratel, Günther, Dr., 87471 Durach (DE); Pfob, Horst, 75031 Eppingen (DE); John, Erich, 75173 Pforzheim (DE); Mikschl, Bernhard, 75056 Sulzfeld (DE)
(74) Vertreter: Patentanwälte Ruff, Wilhelm, Beier, Dauster & Partner

(57) **Zusammenfassung**

Gegenstand der Erfindung ist ein Wärmedämmformkörper (3) aus anorganischem Material, ein Verfahren zu seiner Herstellung und seine Verwendung. Der Formkörper ist durch folgende, gewichtsbezogene Zusammensetzung gekennzeichnet:
a) 5 - 70 Gew.-% anorganisches Füllmaterial
b) 10 - 50 Gew.-% Trübungsmittel
c) 0 - 20 Gew.-% Fasermaterial und
d) 1 - 25 Gew.-% Härtungsmittel.

Sowie mindestens 1 Gew.-% Wasser.

Der Formkörper (3) enthält einen nur geringen Anteil an pyrogener Kieselsäure mit vergleichsweise geringer BET-Oberfläche. Seine Herstellung erfolgt unter Ausschluß von Wasserglas.

Besonders bevorzugt wird ein erfindungsgemässer Wärmedämmformkörper als Distanzelement (3) für eine Strahlungsheizung verwendet.

## Beschreibung

Die Erfindung betrifft einen wärmedämmenden Formkörper aus anorganischem Material, ein Verfahren zur Herstellung des Formkörpers sowie eine Verwendung. Gegenstand der Erfindung ist insbesondere ein wärmedämmender Formkörper, der sich als Distanzelement in Strahlungsheizkörpern für Kochherde und Backöfen eignet.

Aus der DE 196 44 282 ist bereits ein wärmedämmender Formkörper aus geblähtem Vermiculite, anorganischem Bindemittel, Infrarottrübungsmittel, mikroporösem Material und Verstärkungsfasern bekannt. Als anorganisches Bindemittel wird vorzugsweise Wasserglas benutzt.

Aus der EP 0 623 567 ist ein Verfahren zur Herstellung eines Wärmeisolierkörpers aus pyrogener Kieselsäure, Trübungsmittel, organischen Fasern sowie einer oder mehrerer Verbindung(en) aus der Gruppe der Oxide, Hydroxide und Carbonate der Metalle der zweiten Hauptgruppe des Periodensystems bekannt. Der Anteil an pyrogener Kieselsäure ist hier hoch und wird in konkreten Ausführungsformen mit 50 bis 60 Gew.-% beziffert.

Bindemittel wie Wasserglas in der DE 196 44 282 enthalten Natriumund Kaliumionen, was dazu führt, daß das Material nicht elektrisch neutral ist und zudem, ähnlich wie pyrogene Kieselsäure, ein hohes Wasseradsorptionspotential besitzt. Aus den genannten Gründen kommt es bei den gegenwärtig als Wärmeisolierkörper eingesetzten Formkörpern zu folgenden Problemen:
- hohe Feuchtigkeitsaufnahme des Systems;
- eine Hochspannungsprüfung nach Schutzklasse 2 mit 3750 V zwischen Heizleiter und aufgestelltem Topf wird nur mit einer zusätzlichen Hochspannungsfase an der Ringoberseite bestanden;
- wegen des Ableitstroms bei der Hochspannungsprüfung (Schutzklasse 1 gegen geerdete Teile) sind Ausfräsungen im Bereich spannungsführender Teile erforderlich. Diese Aussparungen führen zu einem Energieleck;
- durch den Einsatz von Wasserglas ist die erforderliche elektrische Isoliereigenschaft nicht gewährleistet.

Aufgabe der Erfindung ist es, einen wärmedämmenden Formkörper zur Verfügung zu stellen, der die genannten Nachteile vermeidet, insbesondere einen besseren Härtungsmechanismus aufweist.

Gelöst wird die Aufgabe durch einen Wärmedämmformkörper mit den Merkmalen von Anspruch 1 sowie ein Verfahren mit den Merkmalen von Anspruch 10. Erfindungsgemäß ist ein wärmedämmender Formkörper durch folgende, gewichtsbezogene Zusammensetzung gekennzeichnet:
a) 5 - 70 Gew.-% anorganisches Füllmaterial,
b) 5 - 50 Gew.-% Trübungsmittel,
c) 1 - 25 Gew.-% Härtungsmittel und
d) mind. 0,5 Gew.-% Wasser.

Das erfindungsgemäße Verfahren zeichnet sich dadurch aus, daß die Mischung der drei vorgenannten Anteile unter Beigabe von Wasser erfolgt. Diese Beigabe kann zusammen mit einem der Mischungsbestandteile oder separat erfolgen.

Bevorzugte Aus- bzw. Weiterbildungen des erfindungsgemäßen wärmedämmenden Formkörpers sowie des Herstellungsverfahrens sind in den Unteransprüchen aufgeführt. Der Gegenstand der Ansprüche wird durch ausdrückliche Bezugnahme zum Inhalt der Beschreibung gemacht.

Der erfindungsgemäße Formkörper enthält 5 bis 70 Gew.-%, bevorzugt 15 bis 20 Gew.-%, an anorganischen Füllmaterialien. Bevorzugt eingesetzt werden Siliciumverbindungen, pyrogene Kieselsäure, Lichtbogenkieselsäure, Fällungskieselsäure, Siliciumdioxid-Aerogele, Wollastonit, Ca₃[Si₃O₉], Perlite, Vermiculite, Talk, Glimmer, Kieselerde und Glaskörper. Es können ebenso Aluminiumverbindungen wie Al₂O₃, Tonbauxite und Tonerde verwendet werden. Diese Füllmaterialien können allein oder als Mischungen eingesetzt werden.

Der Formkörper enthält zur Verbesserung der Wärmeisolierung 5 bis 50 Gew.-%, vorzugsweise 25 bis 40 Gew.-%, Trübungsmittel. Geeignete Trübungsmittel sind Ilmenit, Rutil, Zirkondioxid, Siliciumcarbid, Titanoxid, Zirkonoxid, Zirkonsilikat, Manganoxid und Eisen II-/Eisen III-Mischoxide. Dabei wird Siliciumcarbid besonders bevorzugt eingesetzt.

Als Härtungsmittel kommen Oxide und/oder Hydroxide der II. und/oder III. Hauptgruppe des Periodensystems zum Einsatz. Beispiele sind CaO, MgO, B₂O₃, _{c}a(OH)₂, Mg(OH)₂, Al(OH)₃ oder B(OH)₃. Es können aber auch Mischoxide der II. und/oder III. und/oder IV. Hauptgruppe des Periodensystems verwendet werden. Vorzugsweise ist das Zement. Bevorzugt wird hier Portland-Zement und Tonerde-Zement.

Das Härtungsmittel kann auch aus Mischungen aus Oxiden und/oder Hydroxiden und/oder Mischoxiden bestehen. Zur Reaktion müssen die vorgenannten Härtungsmittel zusammen mit Wasser oder als wässrige Suspension der Mischung zugegeben werden. Die Menge an Wasser kann dabei zwischen 0,5 und 35 Gew.-% betragen, bevorzugt 3 bis 20 Gew.-%. Beispielsweise können es 15 Gew.-% sein.

Ein vorteilhafter Formkörper enthält 1 bis 20 Gew.-%, vorzugsweise 1,5 bis 5 Gew.-%, an anorganischen Fasern. Bevorzugt werden Fasern aus SiO₂ wie Quarzglas, Kieselsäurefaser, R-Glas, S2-Glas, ECR-Glas und artverwandte Gläser sowie beliebige Mischungen solcher Fasern.

Ein mit einer Möglichkeit der Erfindung erzielter Vorteil besteht darin, daß der erfindungsgemäße Wärmedämmformkörper keine leitfähigen beweglichen Ionen bzw. kein Wasserglas enthält. Dies bewirkt, daß Faktoren, die zu Problemen beim Ableitstrom führen können, wie beispielsweise lonen oder adsorbiertes Wasser, vermieden werden können. So sind z. B. Hochspannungsfasen an der Ringoberseite sowie Ausfräsungen im Bereich spannungsführender Teile, die zu Energielecks führen, nicht mehr nötig.

Das Verfahren zur Herstellung des erfindungsgemäßen wärme-dämmenden Formkörpers ist dadurch gekennzeichnet, daß zunächst das anorganische Füllmaterial, das Trübungsmittel und das Härtungsmittel gemischt wird. Der Mischung ist Wasser beigegeben. Dabei kann das Härtungsmittel bereits als wässrige Suspension zugegeben werden, oder das Wasser wird separat zugegeben oder einem der anderen Mischungsbestandteile. Diese Mischung wird gepreßt und schließlich bei einer Härtungstemperatur von 250 bis 700°C gehärtet.

Der erfindungsgemäße wärmedämmende Formkörper eignet sich bestens als Distanzelement in Strahlungsheizkörpern für Kochherde und Backöfen.

Im folgenden sind ein Beispiel eines herkömmlichen Wärmedämmformkörpers und zwei Vergleichsbeispiele eines erfindungsgemäßen Wärmedämmformkörpers wiedergegeben:

Die Versuche wurden mit einem Wärmedämmformkörper (WDFT) in Form eines Distanzringes eines Strahlungsheizkörpers mit einem Durchmesser von 180 mm durchgeführt. Die Mischungen wurden in einem Zyklonmischer bei 3000 U/min bei einem Einsatzgewicht von 1 kg für 5 min gemischt. Der WDFT wurde auf einer hydraulischen Presse bei einem Druck von ca. 50 kg/cm² gepreßt.
1) Vergleichsmischung:

| | |
|---|---|
| 36 Gew.-% Kieselsäure | BET-Oberfläche 200 m²/g |
| 1,5 Gew.-% S2-Faser | |
| 35,5 Gew.-% Vermiculite | BET-Oberfläche 13 m²/g |
| 27 Gew.-% Kali-Wasserglas | |

Gewicht WDFT 73 g
Dichte WDFT 0,82 g/cm³
Messung der Tellertemperatur an der Außenseite bei einem Strahlungsheizkörper mit einer Leistung von 1800 W:

| | |
|---|---|
| Tellerbodentemperatur: | 260 °C |
| Tellerrandtemperatur: | 265 °C |

Messung der elektrischen Leitfähigkeit des Ringes:
Der Ring wurde zwischen 2 Metallplatten in den Feuchtraum bei 30 °C und 93% relativer Luftfeuchte gebracht. Danach wurde zwischen den beiden Metallplatten eine Spannung von 250 V angelegt und der durch den Ring fliessende Strom gemessen. gemessener Strom nach:

| | |
|---|---|
| 24 h | 21 mA |
| 48 h | 38 mA |
| 72 h | 50 mA |

2) erste erfindungsgemäße Mischung:
30 Gew.-% pyrogene Kieselsäure BET-Oberfläche 130 m²/g
3 Gew.-% S2-Faser
35 Gew.-% Siliciumcarbid
24 Gew.-% Lichtbogenkieselsäure BET-Oberfläche 30 m²/g
8 Gew.-% Weißkalk
+ 10 g Wasser pro Ring
Gewicht WDFT 60 g
Dichte WDFT 0,67 g/cm³
Messung der Tellertemperatur an der Außenseite bei einem Strahlungsheizkörper mit einer Leistung von 1800 W:

| | |
|---|---|
| Tellerbodentemperatur: | 237 °C |
| Tellerrandtemperatur: | 235 °C |

Messung der elektrischen Leitfähigkeit des Ringes:
Der Ring wurde zwischen 2 Metallplatten in den Feuchtraum bei
30°C und 93% relativer Luftfeuchte gebracht. Danach wurde zwischen den beiden Metallplatten eine Spannung von 250 V angelegt und der durch den Ring fliessende Strom gemessen. gemessener Strom nach:

| | |
|---|---|
| 24 h | 5,5 mA |
| 48 h | 7,5 mA |
| 72h | 10,0 mA |

3) zweite erfindungsgemäße Mischung:
40 Gew.-% pyrogene Kieselsäure BET-Oberfläche 130 m²/g
2 Gew.-% S2-Faser
40 Gew.-% Siliciumcarbid
10 Gew.-% Aluminiumoxid
8 Gew.-% Weißkalk
+ 10 g Wasser pro Ring
Gewicht WDFT 60 g
Dichte WDFT 0,67 g/cm³
Messung der Tellertemperatur an der Außenseite bei einem Strahlungsheizkörper mit einer Leistung von 1800 W:

| | |
|---|---|
| Tellerbodentemperatur: | 235 °C |
| Tellerrandtemperatur: | 233 °C |

Messung der elektrischen Leitfähigkeit des Ringes:
Der Ring wurde zwischen 2 Metallplatten in den Feuchtraum bei
30°C und 93% relativer Luftfeuchte gebracht. Danach wurde zwischen den beiden Metallplatten eine Spannung von 250 V angelegt und der durch den Ring fliessende Strom gemessen. gemessener Strom nach:

| | |
|---|---|
| 24 h | 1,8 mA |
| 48 h | 2,3 mA |
| 72 h | 4,5 mA |

Die elektrischen Isoliereigenschaften konnten also deutlich verbessert werden. Bei der Mischung 3) fließt sozusagen nur noch ein vernachlässigbarer Reststrom.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

Eine Ausführungsformen der Erfindung ist in den Zeichnungen dargestelt. Diese zeigen:
- Fig. 1: einen Schnitt durch einen Strahlungsheizkörper mit einem erfindungsgemässen Wärmedämmformkörper und
- Fig. 2: eine Schrägansicht des Strahlungsheizkörpers aus Fig. 1.

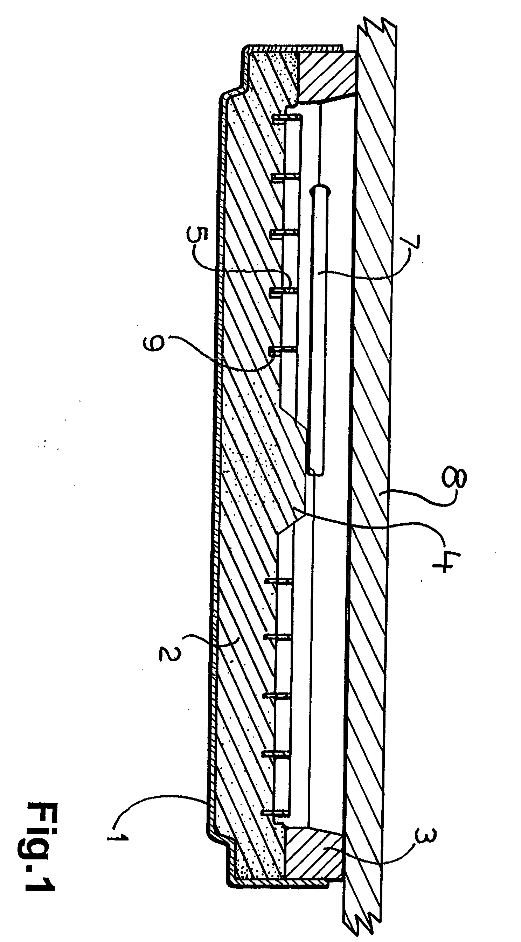

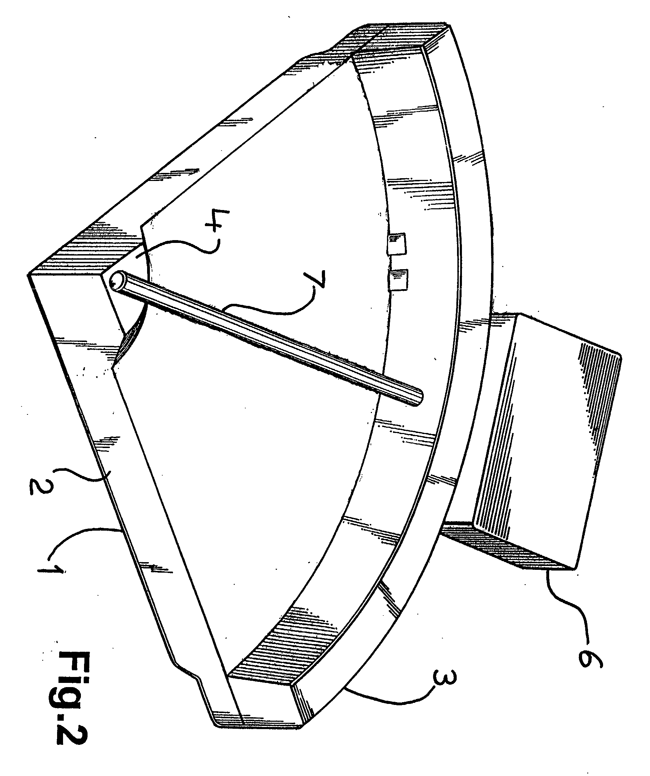

In den Figuren 1 und 2 ist jeweils ein elektrischer Strahlungsheizkörer dargestellt, der an die Unterseite einer Glaskeramikplatte 8 angedrückt ist. Der Strahlungsheizkörper weist eine Aufnahmeschale 1, vorzugsweise aus Blech, auf. In dieser ist ein Wärmedämmformkörper als Unterlage 2 eingelegt. Die Unterlage 2 trägt in Ausnehmungen 9 auf bekannte Art und Weise Heizleiter 5.

Im Mittelbereich weist die Unterlage 2 eine kegelstumpfförmige Erhebung 4 auf. Diese dient als Auflage für den Temperaturfühler 7 des Temperaturwächters 6. Dies ist aus dem Stand der Technik hinreichend bekannt.

Im Außenbereich der Unterlage 2 liegt auf dieser innerhalb der Aufnahmeschale 1 eine außen umlaufenden Rand 3 auf. Dieser Rand 3 dient als Distanzelement, um den Strahlungsheizkörper in einem vorbestimmten Abstand zu dem Glaskeramikplatte 8 zu halten. Ausserdem bildet sie eine Wärmeisolierung zur Seite hin.

In Figur 2 ist der besseren Übersichtlichkeit halber auf die Darstellung der Heizleiter 5 sowie der zugehörigen Ausnehmungen 9 verzichtet worden.

Aus den Zeichnungen ist zu ersehen, dass die Anforderungen an die Wärmedämmung in Form der Unterlage 2 und das Distanzelement in Form des Randes 3 unterschiedlich sind. Die Unterlage 2 trägt den Heizleiter 5 und ist damit zum einen höheren Temperaturen ausgesetzt. Zum anderen muss sie zur Befestigung der Heizleiter 5 ausgebildet sein.

Der Rand 3 wiederum benötigt eine gewisse Festigkeit, vor allem Druckfestigkeit, um den Anpressdruck aufnehmen zu können. Dazu kommen Anforderungen an die Eigenschaften als Wärmedämmung.

## Patentansprüche

1. Wärmedämmformkörper (3) aus anorganischem Material, **gekennzeichnet durch** folgende, gewichtsbezogene Zusammensetzung:
a) 5 bis 70 Gew.-% anorganisches Füllmaterial,
b) 5 bis 50 Gew.-% Trübungsmittel,
c) 1 bis 25 Gew.-% Härtungsmittel und
d) mind. 0,5 Gew.-% Wasser.

2. Wärmedämmformkörper nach Anspruch 1, **dadurch gekennzeichnet, daß** er zusätzlich 1 bis 20 Gew.-% anorganisches Fasermaterial aufweist, wobei vorzugsweise das Fasermaterial S2-Glas ist.

3. Wärmedämmformkörper nach Anspruch 1 oder 2, **gekennzeichnet durch** 0,5 bis 35 Gew.-% Wasser, vorzugsweise ca. 15 Gew.-% Wasser.

4. Wärmedämmformkörper nach einem der vorhergehenden Ansprüche, **dadurch gekennzeichnet, dass** der Anteil des anorganischen Füllmaterials 15 bis 20 Gew.-% beträgt, wobei vorzugsweise das anorganische Füllmaterial mindestens ein Element aus der folgenden Gruppe ist: pyrogene Kieselsäure, Lichtbogenkieselsäure, Wollastonit, Vermiculite, Glimmer, Glaskörper sowie deren Gemische.

5. Wärmedämmformkörper nach Anspruch 4, **dadurch gekennzeichnet, dass** die BET-Oberfläche der pyrogenen Kieselsäure weniger als 350 m²/g, insbesondere ca. 130 m²/g, beträgt.

6. Wärmedämmformkörper nach einem der vorhergehenden Ansprüche, **dadurch gekennzeichnet, dass** der Wärmedämmformkörper als Trübungsmittel Metalloxide, insbesondere TiO₂ und/oder SiC, enthält.

7. Wärmedämmformkörper nach einem der vorhergehenden Ansprüche, **dadurch gekennzeichnet, dass** der Wärmedämmformkörper als Härtungsmittel Oxide der II. und/oder III. Hauptgruppe des Periodensystems enthält, bevorzugt MgO oder CaO.

8. Wärmedämmformkörper nach einem der vorhergehenden Ansprüche, **dadurch gekennzeichnet, dass** der Wärmedämmformkörper als Härtungsmittel Hydroxide der II. und III. Hauptgruppe des Periodensystems, insbesondere Mg(OH)₂, Ca(OH)₂, B(OH)₃ und/oder Al(OH)₃, enthält.

9. Wärmedämmformkörper nach einem der vorhergehenden Ansprüche, **dadurch gekennzeichnet, dass** der Wärmedämmformkörper als Härtungsmittel Mischoxide der II. und/oder III. und/oder IV. Hauptgruppe des Periodensystems, vorzugsweise Zemente, insbesondere Tonerde-Zement, enthält.

10. Verfahren zur Herstellung eines Wärmedämmformkörpers nach einem der vorhergehenden Ansprüche, **gekennzeichnet durch** folgende Verfahrensschritte:
a) Vermischen eines anorganischen Füllmaterials, eines Trübungsmittels und eines Härtungsmittels
b) Vermischen der vorgenannten Anteile unter Zuhilfenahme von Wasser
c) Verpressen der Mischung
d) Härten der Mischung.

11. Verfahren nach Anspruch 10, **dadurch gekennzeichnet, dass** das Härtungsmittel als wässrige Suspension der übrigen Mischung zugegeben wird.

12. Verfahren nach Anspruch 10 oder 11, **dadurch gekennzeichnet, dass** der Wärmedämmformkörper unter Ausschluß von Verbindungen der I. Hauptgruppe, insbesondere Wasserglas, hergestellt wird.
